# EUROPEAN PATENT APPLICATION

(11) **EP 3 257 572 A1**
(43) Date of publication of application: **20.12.2017**
(21) Application number: 16749498.8
(22) Date of filing: 12.02.2016
(51) Int. Cl.: B01D 63/04, B01D 63/02

(54) **BUNDLE OF HOLLOW FIBER MEMBRANES AND MANUFACTURING METHOD THEREFOR**

(30) Priority: 12.02.2015 KR 20150021601
(71) Applicant: Kolon Industries, Inc., Gwacheon-si, Gyeonggi-do 13837 (KR)
(72) Inventor: OH, Young Seok, Yongin-si Gyeonggi-do 16910 (KR); KIM, Kyoung Ju, Yongin-si Gyeonggi-do 16910 (KR); LEE, Jin Hyung, Yongin-si Gyeonggi-do 16910 (KR)
(74) Representative: Merkle, Gebhard
(86) International application number: PCT/KR2016/001448
(87) International publication number: WO 2016/129958

(57) **Abstract**

Disclosed are a bundle of hollow fiber membranes to improve use efficiency of the hollow fiber membranes and a method of manufacturing the same. The bundle of hollow fiber membranes includes a plurality of yarns to form fluid channels and serve as spacers disposed between the hollow fiber membranes to create a bundle. The method includes spinning including supplying a spinning dope to a nozzle and conducting spinning to form a plurality of hollow fiber membranes, coagulating the hollow fiber membranes formed during spinning, and yarn feeding including inserting a plurality of yarns between the hollow fiber membranes to form a bundle. The method of manufacturing the bundle of hollow fiber membranes according to the present invention is effective in uniformly distributing a fluid through fluid channels formed between the hollow fiber membranes and thereby maximizing usage efficiency of the hollow fiber membranes and thus improving performance of a module produced using the hollow fiber membranes as well as in reducing manufacturing devices and offering simple and easy manufacturing process by feeding yarns during production of hollow fiber membranes.

## Description

### [Technical Field]

The present invention relates to a bundle of hollow fiber membranes and a method of manufacturing the same. More particularly, the present invention relates to a bundle of hollow fiber membranes to improve use efficiency of the hollow fiber membranes and a method of manufacturing the same.

### [Background Art]

In general, hollow fiber membranes mainly based on ultrafiltration membranes are actively utilized owing to advantages of wide membrane surface area and ease of modulation compared to other membranes having the same volume. Hollow fiber membranes are used for terminal disposal of sewage, solid-liquid separation in septic tanks, removal of suspended matter from industrial wastewater, filtration of river water, filtration of industrial water, filtration of pool water, and humidifiers for fuel cells.

Permselective membranes used for humidifiers for fuel cells are preferably hollow fiber membranes having a wide permission area per unit volume when modules are formed. That is, when humidifiers are produced using hollow fiber membranes, advantageously, fuel cells can be sufficiently humidified only with a small capacity owing to high-integration of hollow fiber membranes with a wide contact surface area, inexpensive materials can be used, and moisture and heat contained in high-temperature unreacted gas discharged from fuel cells are collected and can thus be recycled through the humidifiers.

Materials used for the hollow fiber membranes include cellulose, polyamide, polyvinyl, polyacrylic and polyolefin resins and the like.

The bundle of hollow fiber membranes means a bundle of hollow fiber membranes which are arranged adjacent to one another in one general direction. The module of hollow fiber membranes means a bundle of hollow fiber membranes, both ends of which are commonly fixed in a header, case or housing by potting. One bundle of hollow fiber membranes may form one hollow fiber membrane module, and a plurality of bundles of hollow fiber membranes may form one hollow fiber membrane module.

With regard to the module using hollow fiber membranes, it is difficult to utilize 100% of a plurality of hollow fiber membranes. Accordingly, technologies to improve usage efficiency of hollow fiber membranes using a variety of methods have been suggested.

Japanese Patent Publication Laid-open Nos. 2004-006100 and 2009-285648 disclose a bundle of a plurality of hollow fiber membranes bound or covered by extra yarns, and Japanese Patent Publication Laid-open No. 2008-119657 discloses knits produced by weaving a plurality of hollow fiber membranes. Meanwhile, Japanese Patent Publication Laid-open No. 2012-005987 discloses a module of hollow fiber membranes which includes an intervening material inserted between the hollow fiber membranes in a potting area to maintain a predetermined distance therebetween.

However, such conventional technologies have problems of low usage efficiency of hollow fiber membranes, much lower usage efficiency, in particular, when fluids are gas. In addition, these technologies have a problem of difficultly in producing a bundle of hollow fiber membranes due to facilities to produce the bundle of hollow fiber membranes.

### [Prior Art Document]

(Patent Document 1) Japanese Patent Publication Laid-open No. 2004-006100 (Publication date: 2004.01.08)
(Patent Document 2) Japanese Patent Publication Laid-open No. 2009-285648 (Publication date: 2009.12.10)
(Patent Document 3) Japanese Patent Publication Laid-open No. 2008-119657 (Publication date: 2008.05.29)
(Patent Document 4) Japanese Patent Publication Laid-open No. 2012-005987 (Publication date: 2012.01.12)

### [Disclosure]

### [Technical Problem]

Therefore, the present invention has been made in view of the above problems, and it is one object of the present invention to provide a bundle of hollow fiber membranes including a fluid channel between the hollow fiber membranes to uniformly distribute the fluid and thereby maximize usage efficiency of the hollow fiber membranes.

It is another object of the present invention to provide a method of manufacturing a bundle of hollow fiber membranes easily by inserting yarns during manufacture of the bundle of hollow fiber membranes.

### [Technical Solution]

In accordance with the present invention, the above and other objects can be accomplished by the provision of a bundle of hollow fiber membranes including a plurality of hollow fiber membranes, wherein a plurality of yarns to form fluid channels and serve as spacers are disposed between the hollow fiber membranes to create a bundle.

The hollow fiber membranes may be disposed in one direction and the yarns may be disposed parallel to the hollow fiber membranes.

The hollow fiber membranes may include any one selected from the group consisting of polyvinylidene fluoride (PVDF), polyacrylonitrile, a polyacrylonitrile copolymer, polysulfone, sulfonated polysulfone, polyethersulfone, cellulose acetate, cellulose triacetate, polymethylmethacrylate or a mixture thereof.

The yarns may include mono-filaments, multi-filaments or a mixture of mono-filaments or multi-filaments which includes at least one selected from the group consisting of polyvinylidene fluoride, polycarbonate, polystyrene, polyester, polyolefin, polyamide, polymethylmethacrylate, polyvinyl chloride and glass fibers. The yarns may be air textured yarns (ATYs) produced by an ATY method or draw textured yarns (DTYs) produced by a DTY method.

The hollow fiber membranes and the yarns may be mixed in a ratio of 1 to 600 yarns to 100 hollow fiber membranes.

The hollow fiber membranes preferably have an outer diameter of 300 to 2,000 µm. The yarns preferably have an outer diameter of 0.01 to 3 mm.

In another aspect of the present invention, provided is a method of manufacturing the bundle of hollow fiber membranes according to the present invention including spinning including supplying a spinning dope to a nozzle and conducting spinning to form a plurality of hollow fiber membranes, coagulating the hollow fiber membranes formed during spinning, and yarn feeding including inserting a plurality of yarns between the hollow fiber membranes to form a bundle.

The method may include further include cleaning the bundle after yarn feeding, and winding the bundle cleaned during cleaning. After the coagulating, cleaning the hollow fiber membranes and then the yarn feeding including inserting a plurality of yarns between the hollow fiber membranes to form a bundle may be conducted and, after the yarn feeding, the winding the bundle may be conducted.

In yet another aspect of the present invention, provided is a method of manufacturing the bundle of hollow fiber membranes according to the present invention including support cable feeding including supplying a support cable to a nozzle, spinning including supplying a spinning dope to the nozzle, conducting spinning and doping an outer surface of the support cable to form a plurality of doping yarns, coagulating the doping yarns formed during spinning, yarn feeding including inserting a plurality of yarns between the doping yarns to form a doping bundle, cutting the doping bundle to a predetermined length, and support cable dissolution including removing the support cable present in the cut doping bundle by dissolution.

After the yarn feeding, cleaning the doping bundle and winding the cleaned doping bundle may be conducted, and the cutting including unwinding the wound doping bundle may be conducted. After the coagulation, cleaning the doping yarns and then the yarn feeding including inserting a plurality of yarns between the doping yarns to form a doping bundle may be conducted, and after the yarn feeding, winding the doping bundle and then the cutting including unwinding the wound doping bundle may be conducted.

### [Effects of the Invention]

The bundle of hollow fiber membranes and the method of manufacturing the same according to the present invention are effective in uniformly distributing a fluid through a fluid channel formed between the hollow fiber membranes, maximizing usage efficiency of the hollow fiber membranes and thus improving performance of a module produced using the hollow fiber membranes.

In addition, the bundle of hollow fiber membranes and the method of manufacturing the same according to the present invention are effective in reducing manufacturing facility and making manufacturing process simple and easy by inserting yarns during manufacture of the hollow fiber membranes.

### [BRIEF DESCRIPTION OF THE DRAWINGS]

The above and other objects, features and other advantages of the present invention will be more clearly understood from the following detailed description taken in conjunction with the accompanying drawings, in which:
FIG. 1 is a sectional view illustrating a bundle of hollow fiber membranes manufactured according to the present invention;
FIG. 2 shows a device and process for manufacturing a bundle of hollow fiber membranes according to a first embodiment;
FIG. 3 shows details of the nozzle shown in FIG. 2;
FIG. 4 is a sectional view of the hollow fiber membrane taken along the line A-A of FIG. 3;
FIG. 5 shows a cross-section of one nozzle body for forming a plurality of hollow fiber membranes in a device for manufacturing the bundle of hollow fiber membranes according to the present invention;
FIG. 6 shows cross-sections of a plurality of nozzle bodies for forming a plurality of hollow fiber membranes in a device for manufacturing the bundle of hollow fiber membranes according to the present invention;
FIG. 7 is a flowchart illustrating a process for manufacturing the bundle of hollow fiber membranes according to FIG. 2;
FIG. 8 shows a device and process for manufacturing a bundle of hollow fiber membranes according to a second embodiment;
FIG. 9 is a sectional view of a doping yarn taken along the line B-B of FIG. 8;
FIG. 10 shows a device and process for removing, by dissolution, a support cable of a doping bundle which is unwound from the winding roll of FIG. 8 and then cut; and
FIG. 11 is a flowchart illustrating the process of manufacturing the bundle of hollow fiber membranes shown in FIGS. 8 and 10.

### [Best Mode]

Hereinafter, embodiments of the present invention will be described in more detail such that a person having ordinary knowledge in the field to which the present invention pertains can easily implement the embodiments. However, the embodiments of the present invention can be implemented in various forms and should not be construed as being limited to the embodiments described herein.

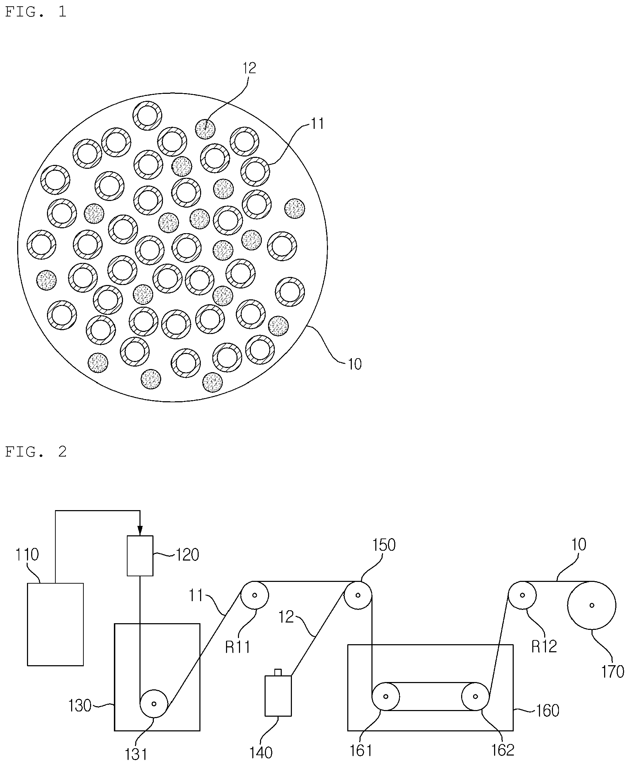

FIG. 1 is a sectional view illustrating a bundle of hollow fiber membranes manufactured according to the present invention. As shown in the drawing, the bundle of hollow fiber membranes 10 according to the present invention includes a plurality of yarns 12, which serve as spacers and function to create fluid channels, between a plurality of hollow fiber membranes 11 to create a bundle.

The hollow fiber membranes 11 are disposed in one direction such that they are spaced from one another by a predetermined distance and the yarns 12 are disposed in areas formed between the hollow fiber membranes 11 and are disposed parallel to the hollow fiber membranes. In addition, in some cases, the hollow fiber membranes 11 may partially contact the yarns 12.

The hollow fiber membranes 11 includes any one selected from the group consisting of polyvinylidene fluoride (PVDF), polyacrylonitrile, polyacrylonitrile copolymers, polysulfone, sulfonated polysulfone, polyethersulfone, cellulose acetate, cellulose triacetate, polymethylmethacrylate or a mixture thereof.

The yarns 12 may be monofilaments, multifilaments or a mixture of monofilaments and multifilaments which includes at least one selected from the group consisting of polyvinylidene fluoride, polycarbonate, polystyrene, polyester, polyolefin, polyamide, polymethylmethacrylate, polyvinyl chloride and glass fiber. The yarns 12 may be air textured yarns (ATYs) produced by an ATY (air-jet texturing) method or draw textured yarns (DTYs) produced by a DTY (draw texturing) method.

The ATY method includes exposing consecutive filaments to a compressive air flow to allow respective filaments to form a plurality of loops and crimps. Since the ATYs produced by the ATY method create loops, they have low elongation, do not decrease bulk due to tension, serve as fine hair on the surfaces of spinning yarns and provide soft texture due to presence of air therein.

The DTY method involves twisting and then untwisting and setting simultaneously threads to have the threads partially swollen. The DTYs produced by the DTY method have the same soft and hairy surface as natural fibers, unlike general chemical fibers having a smooth and cool surface.

The ATYs or DTYs are arranged in one direction such that they are bent or curved, rather than extending straight. In addition, since twists, fine hair, roughness and the like are created on the surface of yarns, predetermined areas can be formed around the yarns. The neighboring areas enable sufficient spaces to be secured between the hollow fiber membranes 11 so that a fluid can be easily moved outside of the hollow fiber membranes 11, although the hollow fiber membranes 11 and the yarns 12 are arranged narrowly or contact. Apart from the ATYs or DTYs, yarns, which are produced by another method such that they are bent or curved, and have twists, fine hair, roughness and the like on the surface thereof, can secure spaces between the hollow fiber membranes 11 owing to the neighboring areas as well.

The hollow fiber membranes 11 and the yarns 12 are preferably mixed in a ratio of 1 to 600 yarns to 100 hollow fiber membranes 100. The outer diameter of the hollow fiber membranes is preferably 300 to 2,000 µm and the outer diameter of the yarns is preferably 0.01 to 3 mm. When the hollow fiber membranes are densely disposed, flow of a fluid is not smooth and, when the hollow fiber membranes are coarsely disposed, the mix ratio and size of hollow fiber membranes and yarns should be suitably controlled since there is a risk that the fluid is not uniformly distributed.

The yarns 12 arranged between the hollow fiber membranes 11 create spaces between the hollow fiber membranes and form fluid channels to uniformly distribute the fluid, maximize usage efficiency of the hollow fiber membranes and thereby improve performance of modules produced.

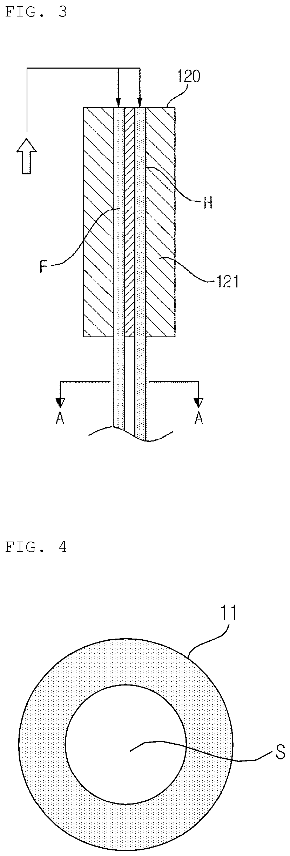

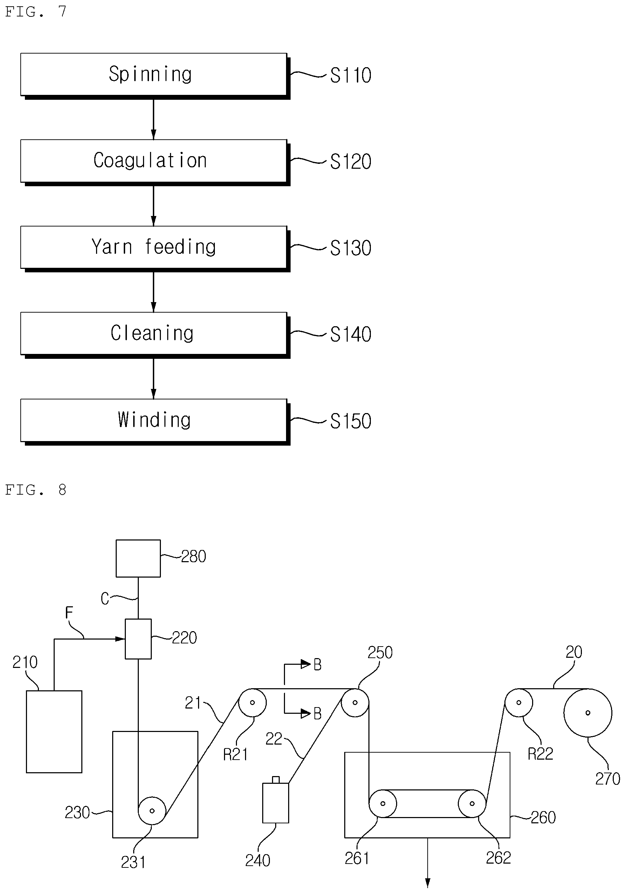

FIG. 2 shows a device and process for manufacturing a bundle of hollow fiber membranes according to a first embodiment, FIG. 3 shows details of the nozzle shown in FIG. 2, FIG. 4 is a sectional view of the hollow fiber membrane taken along the line A-A of FIG. 3, and FIG. 7 is a flowchart illustrating a process for manufacturing the bundle of hollow fiber membranes according to FIG. 2. As shown in the drawings, the bundle of hollow fiber membranes is manufactured through spinning (S110), coagulation (S120), yarn feeding (S130), cleaning (S140) and winding (S150).

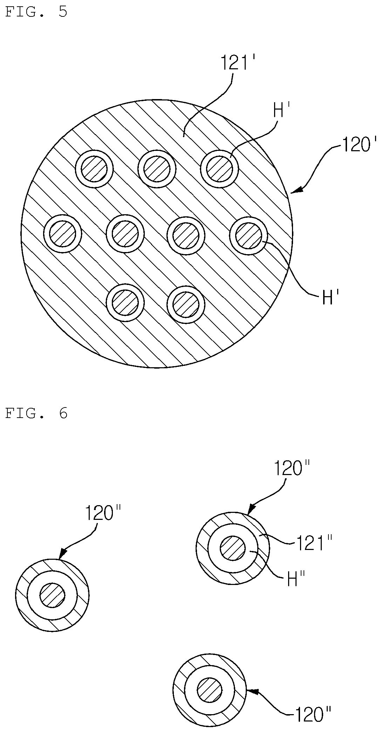

Although FIG. 2 shows an example in which a bundle is produced using one hollow fiber membrane 11 and one yarn 12, one bundle 10 as shown in FIG. 1 is produced by simultaneously forming a plurality of hollow fiber membranes 11, and feeing a plurality of yarns 12 between the hollow fiber membranes 11. In order to produce a plurality of hollow fiber membranes 11, as shown in FIG. 5, a nozzle 120' including one nozzle body 121' provided with a plurality of spinning holes H' having a ring-shaped cross-section is used, or as shown in FIG. 6, a plurality of nozzles 120" respectively including a plurality of nozzle bodies 121", each provided with a spinning hole (H") having a ring-shaped cross-section is used.

Spinning (S110) is a step of supplying a spinning dope F from a spinning dope tank 110 to a nozzle 120 and conducting spinning to form hollow fiber membranes 11 each having a hollow S.

The spinning dope F includes a polymer, an additive and a solvent. For example, the polymer may include any one selected from the group consisting of polyvinylidene fluoride (PVDF), polyacrylonitrile, a polyacrylonitrile copolymer, polysulfone, sulfonated polysulfone, polyethersulfone, cellulose acetate, cellulose triacetate, polymethylmethacrylate and a mixture thereof. In addition, the additive may include any one selected from the group consisting of water, methyl alcohol, ethyl alcohol, ethylene glycol, polyethylene glycol, polypropylene glycol, glycerin, polyvinyl pyrrolidone (PVP) and a mixture thereof. In addition, the solvent may include any one selected from the group consisting of N-methyl-2-pyrrolidone (NMP), dimethyl formamide (DMF), dimethyl acetamide (DMAc), chloroform, tetrahydrofuran and a mixture thereof.

The nozzle 120 includes a nozzle body 121 provided with a plurality of spinning holes (H) each having a ring-shaped cross-section and the spinning dope F is spun through the spinning holes (H) to form hollow fiber membranes 11 each having a hollow therein. The spinning dope F has a viscosity of 30,000 cps to 60,000 cps at 30°C and is maintained at 40 to 70°C for spinning.

The coagulation (S120) is a step of coagulating the hollow fiber membranes 11 formed during spinning (S110) in a coagulation bath 13 at a temperature of 30 to 50°C. The hollow fiber membranes 11 are guided by a guide roll 131 provided in the coagulation bath 130. The coagulated hollow fiber membranes 11 pass through the guide roll R11 and are then combined with the yarns in a yarn plying roll 150.

Yarn feeding (S130) is a step of feeding yarns from a bobbin 140, on which the yarns are wound, to the yarn plying roll 150, which includes inserting a plurality of yarns 12 between the hollow fiber membranes 11 guided to the yarn plying roll 150, to form a bundle 10.

The cleaning (S140) is a step of cleaning the bundle 10 formed by combination through the yarn plying roll 150, which involves guiding by guide rolls 161 and 162 provided in a cleaning bath 160. The winding (S150) is a step of winding the cleaned bundle 10 on a winding roll 170 while being guided by a guide roll R12. The bundle 10 wound on the winding roll 170 is cut to a predetermined size and is moved to module formation equipment which is then used.

Meanwhile, after coagulation (S120), the hollow fiber membranes 11 are cleaned (S140), and yarn feeding (S130) of inserting a plurality of yarns 12 between the hollow fiber membranes 11 to form a bundle 10 is conducted, and after yarn feeding (S130), winding (S150) of winding the bundle 10 is conducted.

The method of manufacturing the bundle of hollow fiber membranes according to the present invention is effective in reducing manufacture devices and offering simple and easy manufacturing process by feeding yarns during production of hollow fiber membranes.

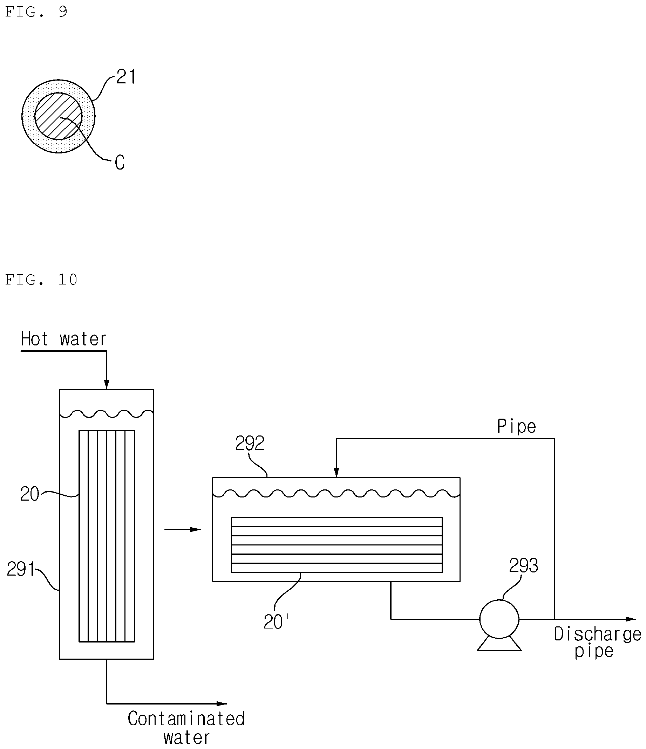

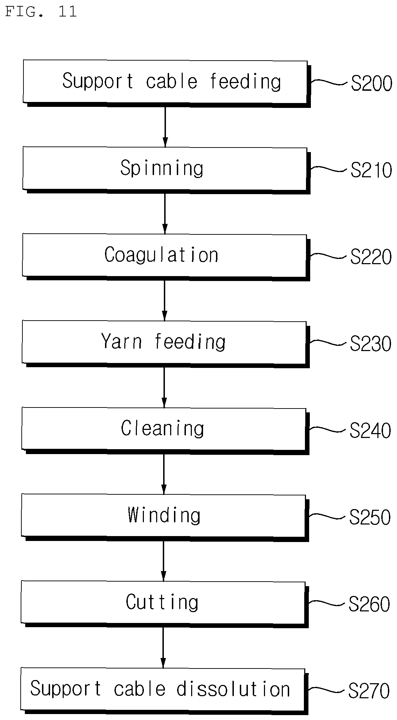

FIG. 8 shows a device and process for manufacturing a bundle of hollow fiber membranes according to a second embodiment, FIG. 9 is a sectional view of a doping yarn taken along the line B-B of FIG. 8, FIG. 10 shows a device and process for removing, by dissolution, a support cable of a doping bundle which is unwound from the winding roll of FIG. 8 and then cut, and FIG. 11 is a flowchart illustrating the process of manufacturing the bundle of hollow fiber membranes shown in FIGS. 8 and 10.

The method of manufacturing a bundle of hollow fiber membranes according to the second embodiment includes doping the outer surfaces of a plurality of support cables (C) with a spinning dope F to produce a plurality of doping yarns 21, mixing the doping yarns 21 with a plurality of yarns 22 to produce a doping bundle 20, followed by winding, and then removing the support cable C present in the doping yarn 21 of the doping bundle 20 cut to a predetermined length by dissolution. As described above, the respective steps of the method of manufacturing the bundle of hollow fiber membranes according to the present embodiment include support cable feeding (S200), spinning (S210), coagulation (S220), yarn feeding (S230), cleaning (S240), winding (S250), cutting (S260), and support cable dissolution (S270).

The support cable feeding (S200) is a step of supplying a support cable (C) from the support cable feeder 280 to the nozzle 220. The support cable (C) is a core cable including polyvinyl alcohol (PVA) plasticized by 5 to 20 wt% of a plasticizer.

Spinning (S210) is a step including supplying a spinning dope F from the spinning dope tank 210 to the nozzle 220 and conducting spinning and doping the outer surface of the support cable (C) to form a plurality of doping yarns 21. The spinning dope F of the second embodiment is the same as that of the first embodiment and a detailed explanation thereof is thus omitted. The nozzle 220 has a nozzle body provided with a plurality of spinning holes, and the spinning dope F is spun through spaces between the support cable (C) inserted through the spinning holes to create doping yarns 21. The spinning dope F has a viscosity of 30,000 cps to 60,000 cps at 30°C and is maintained at 40 to 70°C for spinning.

Coagulation (S220) is a step of coagulating the doping yarns 21 formed during spinning (S210) in a coagulation bath 230 at a temperature of 30 to 50°C. The doping yarns 21 are guided by a guide roll 231 provided in the coagulation bath 230. The coagulated doping yarns 21 pass through the guide roll R21 and are combined with the yarns 22 in a yarn plying roll 250.

Yarn feeding (S230) is a step of feeding yarns from a bobbin 240, on which the yarns are wound, to the yarn plying roll 250, which includes inserting a plurality of yarns 22 between the doping yarns 21 guided to the yarn plying roll 250 to form a doping bundle 20.

Cleaning (S240) is a step of cleaning the doping bundle 20 formed by combination through the yarn plying roll 250, which involves guiding by guide rolls 261 and 262 provided in a cleaning bath 260. The winding (S250) is a step of winding the cleaned doping bundle 20 guided by a guide roll R22 on a winding roll 270.

The doping bundle 20 wound on the winding roll 270 is subjected to unwinding and then cutting (S260) to a predetermined size and the support cable (C) in the cut doping bundle 20 is vertically hung in a dissolution tank 291 according to an appropriate method, support cable dissolution (S270) of supplying 60 to 80°C hot water to the cable dissolution tank 291 until the doping bundle 20 is immersed is conducted to complete the bundle of hollow fiber membranes.

Since PVA (polyvinyl alcohol) has a density of about 1.33, plasticized PVA is dissolved and the dissolved PVA is moved below the cable dissolution tank 291 through the inside and outside of the bundle of hollow fiber membranes (doping bundle). Contaminated water contaminated by PVA present in the lower layer is collected below the cable dissolution tank 291 and then removed.

When the concentration of PVA in the cable dissolution tank 291 is less than about 0.5%, the bundle of hollow fiber membranes 20' is moved from the cable dissolution tank 291 to an additional cleaning tank 292. Until this step, many pores of the hollow fiber membrane are still clogged and the bundle of hollow fiber membranes 20' is treated in a horizontal additional cleaning tank 292 with a 0.1 to 0.5% aqueous light NaOCl solution at 20 to 80°C, preferably, 40 to 60°C to remove PVA and other contaminants left behind in the pores and inner diameter of hollow fiber membranes. The aqueous solution is recycled through a pump 293 and a pipe, and then discharged through a post-discharge pipe for a predetermined time. After this step, a bundle of hollow fiber membranes having an inner diameter where there is no residual PVA or other contaminants clogging the pores of the hollow fiber membrane is transferred to module formation equipment.

Meanwhile, after coagulation (S220), the plurality of doping yarns 21 are cleaned, yarn feeding (S230) is conducted by inserting a plurality of yarns 22 between the doping yarns 21 to form a doping bundle 20, and after yarn feeding (S230), winding the doping bundle 20 (S250) and cutting including unwinding and cutting the wound doping bundle 20 (S260) are conducted.

Hereinafter, the effects of the present invention will be described based on a test example to confirm change in humidification performance between a hollow fiber membrane humidification module produced using the bundle of hollow fiber membranes (using yarns) according to the first embodiment, a hollow fiber membrane humidification module produced using a conventional bundle of hollow fiber membranes (not using yarns).

### [Production Example: Production of hollow fiber membrane humidification module]

The hollow fiber membrane humidification module not using yarns was produced by disposing 1400 polysulfone hollow fiber membranes (outer diameter: 800 µm, inner diameter: 600 µm) to produce into one bundle of hollow fiber membranes in a cylindrical housing (diameter: 60 mm, length: 350 mm), forming a potting part on two ends of the housing, and covering the two ends of the housing.

The hollow fiber membrane humidification module using yarns was produced by disposing 1400 yarns (general yarns, ATYs, DTYs) between 1400 polysulfone hollow fiber membranes (outer diameter: 800 µm, inner diameter: 600 µm) to produce into one bundle of hollow fiber membranes in a cylindrical housing (diameter 60 mm, length 350 mm), forming a potting part on two ends of the housing, and covering the two ends of the housing.

### [Test Example: Measurement of performance of produced hollow fiber membrane humidification module]

150 slpm dry air was fed to the inside and outside of the hollow fiber membranes of the hollow fiber membrane humidification module, gas-gas humidification was conducted under the conditions that the outside of the hollow fiber membrane was set to 70°C and 90% humidity, whereas the inside of the hollow fiber membrane was set to 50°C and 10% humidity. The humidification performance was measured by measuring the temperature and humidity at which air flowing inside of the hollow fiber membrane was humidified and discharged, and converting the same into the dew point. Measurement results are shown in the following Table 1. The dew point is a parameter indicating humidification performance. As the dew point at which air is humidified and discharged increases, humidification performance is improved.

**Table 1**

| | No yarns are used | General yarns are used | ATYs are used | DTYs are used |
|---|---|---|---|---|
| Humidification performance (ADT, °C) | 11 | 10 | 8 | 8.3 |

As can be seen from Table 1, when testing was conducted by changing only the type of yarns (spacers) while using the same hollow fiber membranes, humidification performance was changed depending on uniformity of humid air (shell) of the outside of the hollow fiber membrane, and ATYs and DTYs having better humidification performance could effectively form spaces between hollow fiber membranes due to unique surfaces of yarns, compared to general yarns. That is, the ATYs and DTYs exhibited superior performance as spacers, compared to general yarns (air should uniformly spread and therefore all hollow fiber membranes should be used in order to obtain higher humidification performance).

ADT (Approach Dew-point Temperature) in Table 1 means a method representing humidification performance (difference in dew point between air incorporated in the shell and air humidified and discharged).

The humidification performance was changed according to the function of spacers (yarns) with regard to the same hollow fiber membranes. Yarns, which more effectively functioned as spacers, exhibited better humidification performance, since humid air uniformly surrounded the outside of the hollow fiber membrane. The fact that ATYs and DTYs have better humidification performance than general yarns means these ATYs and DTYs can more effectively serve as spacers.

As can be seen from Table 1, ATYs and DTYs can serve as spacers more efficiently, compared to general yarns, so that humidification performance is improved when ATYs and DTYs are applied to a humidifier. In addition, when yarns are utilized, humidification performance is improved, as compared to when the yarns are not used.

Although the preferred embodiments of the present invention have been disclosed for illustrative purposes, those skilled in the art will appreciate that various modifications, additions and substitutions are possible, without departing from the scope and spirit of the invention as disclosed in the accompanying claims.

## Claims

1. A bundle of hollow fiber membranes comprising a plurality of hollow fiber membranes,
wherein a plurality of yarns to form fluid channels and serve as spacers are disposed between the hollow fiber membranes to create a bundle, and the yarns are air textured yarns (ATYs) produced by an ATY method or draw textured yarns (DTYs) produced by a DTY method.

2. The bundle of hollow fiber membranes according to claim 1, wherein the hollow fiber membranes are disposed in one direction and the yarns are disposed parallel to the hollow fiber membranes.

3. The bundle of hollow fiber membranes according to claim 1, wherein the hollow fiber membranes comprise any one selected from the group consisting of polyvinylidene fluoride (PVDF), polyacrylonitrile, a polyacrylonitrile copolymer, polysulfone, sulfonated polysulfone, polyethersulfone, cellulose acetate, cellulose triacetate, polymethylmethacrylate or a mixture thereof.

4. The bundle of hollow fiber membranes according to claim 1, wherein the yarns comprise mono-filaments, multi-filaments or a mixture of mono-filaments or multi-filaments which comprises at least one selected from the group consisting of polyvinylidene fluoride, polycarbonate, polystyrene, polyester, polyolefin, polyamide, polymethylmethacrylate, polyvinyl chloride and glass fibers.

5. The bundle of hollow fiber membranes according to claim 1, wherein the hollow fiber membranes and the yarns are mixed in a ratio of 1 to 600 yarns to 100 hollow fiber membranes.

6. The bundle of hollow fiber membranes according to claim 1, wherein the hollow fiber membranes have an outer diameter of 300 to 2,000 µm.

7. The bundle of hollow fiber membranes according to claim 1, wherein the yarns have an outer diameter of 0.01 to 3 mm.

8. A method of manufacturing the bundle of hollow fiber membranes according to claim 1, the method comprising:
spinning including supplying a spinning dope to a nozzle and conducting spinning to form a plurality of hollow fiber membranes;
coagulating the hollow fiber membranes formed during spinning; and
yarn feeding including inserting a plurality of yarns between the hollow fiber membranes to form a bundle.

9. The method according to claim 8, further comprising:
cleaning the bundle after yarn feeding; and
winding the bundle cleaned during cleaning.

10. The method according to claim 8, wherein, after the coagulating, cleaning the hollow fiber membranes and then the yarn feeding including inserting a plurality of yarns between the hollow fiber membranes to form a bundle are conducted and,
after the yarn feeding, the winding the bundle is conducted.

11. A method of manufacturing the bundle of hollow fiber membranes according to claim 1, the method comprising:
support cable feeding including supplying a support cable to a nozzle;
spinning including supplying a spinning dope to the nozzle, conducting spinning and doping an outer surface of the support cable to form a plurality of doping yarns;
coagulating the doping yarns formed during spinning;
yarn feeding including inserting a plurality of yarns between the doping yarns to form a doping bundle;
cutting the doping bundle to a predetermined length; and
support cable dissolution including removing the support cable present in the cut doping bundle by dissolution.

12. The method according to claim 11, wherein, after the yarn feeding, cleaning the doping bundle and winding the cleaned doping bundle are conducted, and the cutting including unwinding the wound doping bundle is then conducted.

13. The method according to claim 11, wherein, after the coagulation, cleaning the doping yarns and then the yarn feeding including inserting a plurality of yarns between the doping yarns to form a doping bundle are conducted, and
after the yarn feeding, winding the doping bundle is conducted, and the cutting including unwinding the wound doping bundle is then conducted.
